# EUROPEAN PATENT APPLICATION

(11) **EP 4 841 453 A1**
(43) Date of publication of application: **18.11.2026**
(21) Application number: 26178900.2
(22) Date of filing: 15.05.2026
(51) Int. Cl.: G06F 12/02, G06F 3/06

(54) **MEMORY CONTROLLER AND METHOD OF MANAGING DIRTY DATA THEREOF**

(30) Priority: 16.05.2025 KR 20250063700
(71) Applicant: SK hynix Inc., Bubal-eub Icheon-si, Gyeonggi-do 17336 (KR)
(72) Inventor: HONG, Gyu Yeul, 17336 Icheon-si, Gyeonggi-do (KR); KWON, Ku Ik, 17336 Icheon-si, Gyeonggi-do (KR); JIN, Byoung Min, 17336 Icheon-si, Gyeonggi-do (KR)
(74) Representative: Isarpatent

(57) **Abstract**

A memory controller controlling a plurality of memory regions includes a migration operation control section configured to perform a migration operation to move data of a first region to a second region, among the plurality of memory regions, and a host interface layer configured to translate logical addresses corresponding to the first region into global logical page numbers, and manage a bitmap corresponding to each of the global logical page numbers. The bitmap includes information on dirty data indicating whether the data of the first region is changed during the migration operation.

## Description

### BACKGROUND

### 1. Technical Field

Various embodiments of the present disclosure relate generally to a memory controller, and more particularly, to a memory controller and a method of managing dirty data indicating whether a memory region is changed.

### 2. Related Art

A memory device is divided into a volatile memory and a non-volatile memory. A volatile memory is a memory device that stores data only when power is supplied, and when the power supply is cut off, the stored data is destroyed. A non-volatile memory is a memory device in which data is not destroyed even when the power is cut off. The storage device may include a memory device and a memory controller that controls the operation of the memory device.

The storage device may perform a live migration operation to move a virtual machine from one physical host device to another host device without interruption of service or normal operations. The storage device may generate dirty data for data that changes during the live migration operation, and may provide information on the dirty data in response to a request received from the host device. In order to quickly respond to the request for the information on the dirty data from the host device, there is a need for the storage device to efficiently manage the dirty data.

### SUMMARY

Embodiments of the present disclosure provide a memory controller and a method of managing dirty data thereof by managing a bitmap including information on the dirty data in a host interface layer according to a global logical page number.

According to an embodiment, a memory controller controlling a plurality of memory regions may include a migration operation control section configured to perform a migration operation to move data of a first region to a second region, among the plurality of memory regions, and a host interface layer configured to translate logical addresses corresponding to the first region into global logical page numbers, and manage a bitmap corresponding to each of the global logical page numbers. The bitmap includes information on dirty data indicating whether the data of the first region is changed during the migration operation.

According to an embodiment, a memory controller may include a host interface layer configured to manage a bitmap including information on dirty data indicating whether data in a memory region is changed since receiving a tracking command, and generate address information indicating a target region upon receiving a trim request for the target region of the memory region from a host device, and a flash translation layer configured to transfer, to the host interface layer, trim information indicating whether to initialize a portion of the bitmap corresponding to the target region, based on a result of performing a read operation on the target region according to the address information received from the host interface layer. The host interface layer is configured to initialize the portion of the bitmap based on the trim information.

According to an embodiment, a method of operating a memory controller may include controlling a memory device to perform a migration operation to move data in a first region to a second region, among a plurality of memory regions included in the memory device, managing a bitmap corresponding to each of global logical page numbers to which logical addresses corresponding to the first region are translated, and providing information on dirty data indicating whether data in the first region is changed during the migration operation included in the bitmap to a host device in response to a request from the host device.

### BRIEF DESCRIPTION OF THE DRAWINGS

FIG. 1 is a diagram illustrating a storage device according to an embodiment of the present disclosure;
FIG. 2 is a diagram illustrating a bitmap including information on dirty data managed in response to FTL logical page numbers;
FIG. 3 is a diagram illustrating an operation for managing information on dirty data in a host interface layer according to an embodiment of the present disclosure;
FIG. 4 is a sequence diagram illustrating a method of initializing a value of a bitmap including information on dirty data according to an embodiment of the present disclosure;
FIG. 5 is a diagram illustrating a case where an address range, requested to be trimmed during a trim operation of FIG. 4, is an unmapped area;
FIG. 6 is a diagram illustrating a case where a portion of an address range, requested to be trimmed during a trim operation of FIG. 4, is a mapped area;
FIG. 7 is a flowchart illustrating an operation for managing information on dirty data according to an embodiment of the present disclosure; and
FIG. 8 is a diagram illustrating a configuration of a data storage system including a memory controller according to an embodiment of the present disclosure.

### DETAILED DESCRIPTION

Specific structural or functional descriptions of examples of embodiments in accordance with concepts which are disclosed in this specification are illustrated only to describe the examples of embodiments in accordance with the concepts and the examples of embodiments in accordance with the concepts may be carried out by various forms but the descriptions are not limited to the examples of embodiments described in this specification.

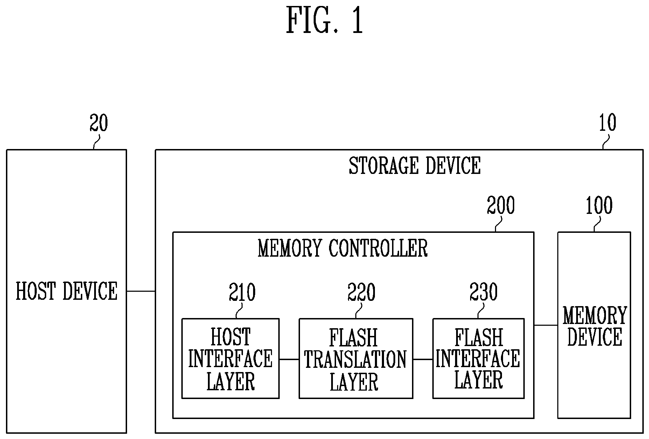

FIG. 1 is a diagram illustrating a storage device 10 according to an embodiment of the present disclosure.

Referring to FIG. 1, the storage device 10 may include a memory device 100 and a memory controller 200 which controls the operation of the memory device 100. The storage device 10 stores data under the control of a host device 20, such as a cell phone, a smartphone, an MP3 player, a laptop computer, a desktop computer, a gaming machine, a television, a tablet PC, or an in-vehicle infotainment system.

In FIG. 1, the storage device 10 is shown as being coupled to the host device 20, but this is only an example, and the storage device 10 may be coupled to a plurality of host devices. Each of the plurality of host devices may execute a program to create a virtual machine. The storage device 10 may perform a migration operation to move data between the host devices.

The storage device 10 may be manufactured as one of various types of storage devices, depending on a method of communication with the host device 20. For example, the storage device 10 may be configured as one of a variety of types of storage devices such as a compute express link (CXL) storage device, a solid state drive (SSD), a multimedia card in the form of a MultiMediaCard (MMC), an embedded MMC (eMMC), a reduced-size MMC (RS-MMC), or a micro-MMC, a secure digital (SD) card in the form of an SD, mini-SD, or micro-SD, a universal serial bus (USB) storage device, or a universal flash storage (UFS) device, a storage device in the form of a peripheral component interconnection (PCI) card, a storage device in the form of a PCI express (PCI-E) card, a compact flash (CF) card, a smart media card, a memory stick, and the like.

The memory device 100 may store data. The memory device 100 is operable in response to control from the memory controller 200. The memory device 100 may include a plurality of memory blocks. The memory blocks may include a plurality of memory cells storing data. Among the plurality of memory cells, memory cells coupled to the same word line may be defined as one physical page.

In an embodiment, the memory device 100 may include random access memory (RAM), non-volatile memory (NVM), double data rate synchronous dynamic random access memory (DDR SDRAM), Low Power Double Data Rate4 (LPDDR4) SDRAM, Graphics Double Data Rate (GDDR) SDRAM, Low Power DDR (LPDDR), Rambus Dynamic Random Access Memory (RDRAM), NAND flash memory, resistive random access memory (RRAM), phase-change RAM (PRAM), magnetoresistive random access memory (MRAM), ferroelectric random access memory (FRAM), spin transfer torque random access memory (STT-RAM), or the like.

The memory device 100 is configured to receive a command and an address from the memory controller 200, and to access an area selected by the address in a storage area. In other words, the memory device 100 may perform an operation directed by the command on the area selected by the address. For example, the memory device 100 may perform a write operation (a program operation), a read operation, and an erase operation. During a program operation, the memory device 100 may program data into the area selected by the address. During a read operation, the memory device 100 may read data stored in the area selected by the address. During an erase operation, the memory device 100 may erase the data stored in the area selected by the address.

The memory controller 200 controls the overall operation of the memory device 100. The memory controller 200 may receive data and a logical address from the host device 20, and may translate the logical address into a physical address which represents an address of memory cells in the memory device 100 in which the data included in the memory device 100 is to be stored.

In FIG. 1, the storage device 10 is shown to include the memory device 100, but this is by way of illustration only, and storage device 10 may include a plurality of memory devices. According to an embodiment of the present disclosure, the memory controller 200 may manage the plurality of memory devices in a namespace unit which is a logical unit. The memory controller 200 may divide the physically distinct memory devices into a plurality of logical regions based on a predetermined storage capacity, and may manage the logical regions on a namespace basis.

The memory controller 200 may control the memory device 100 to perform a program operation, a read operation, or an erase operation, or the like, in response to a request from the host device 20. In a program operation, the memory controller 200 may provide a write command, a physical address, and data to the memory device 100. In a read operation, the memory controller 200 may provide a read command and a physical address to the memory device 100. In an erase operation, the memory controller 200 may provide an erase command and a physical address to the memory device 100.

The memory controller 200 may include a processor and firmware to perform logical operations. The processor may execute programs stored in the firmware. The firmware may include a host interface layer (HIL) 210, a flash translation layer (FTL) 220, and a flash interface layer (FIL) 230. The host interface layer 210 may interpret a command included in a request received from the host device 20 and transfer the interpreted command to the flash translation layer 220. The flash translation layer 220 may utilize a mapping table to translate the logical address requested by the host device 20 and the physical address of the memory device 100. The flash interface layer 230 may transfer the command received from the flash translation layer to the memory device 100.

According to an embodiment of the present disclosure, the memory controller 200 may control a plurality of memory regions included in the memory device 100. The memory controller 200 may include a migration operation control section to move data from one of the plurality of memory regions to another region. The memory controller 200 may manage a bitmap which includes information on dirty data indicating whether data in a memory region has been changed while the migration operation is performed. The host interface layer 210 may manage the bitmap based on logical page numbers which are translated from logical addresses.

The host device 20 may transfer a request to the memory controller 200 to determine if any data has changed while the migration operation is being performed. The host interface layer 210 may provide the information on the dirty data to the host device 20 in response to the request from the host device 20. According to an embodiment of the present disclosure, the plurality of memory regions may be a plurality of logical regions managed on a namespace basis.

According to an embodiment of the present disclosure, the host interface layer 210 may translate logical addresses corresponding to a memory region in which data being migrated is stored into global logical page numbers, and may manage a bitmap corresponding to each of the global logical page numbers. The host interface layer 210 may initialize values in the bitmap based on a trim request received from the host device 20.

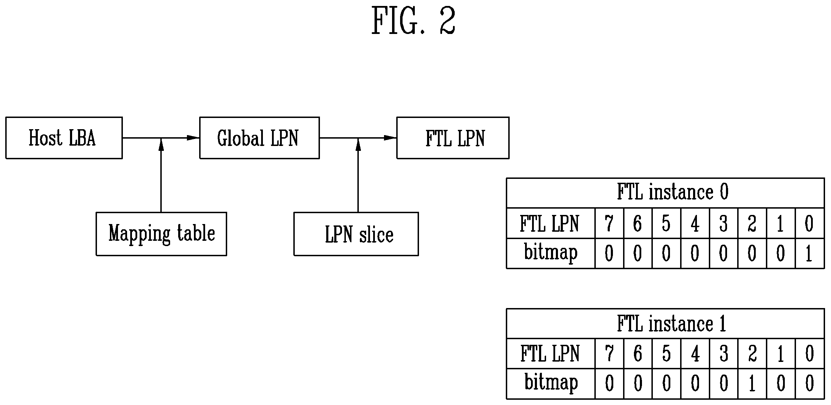

FIG. 2 is a diagram illustrating a bitmap including information on dirty data managed in response to FTL logical page numbers.

Referring to FIG. 2, information on dirty data is managed by the flash translation layer 220 while a data migration operation is being performed. A write operation is performed using a flash translation layer (FTL) logical page number (LPN) and an FTL instance, and the information on the dirty data is also managed using the FTL LPN and the FTL instance. For ease of description, the FTL instance may be assumed to be an FTL instance 0 and an FTL instance 1.

When the memory controller 200 controls a write operation to be performed on the memory device 100, a host logical block address (LBA) may be translated to an FTL LPN. Specifically, the host interface layer 210 may obtain the host LBA from a request received from the host device 20. The host LBA may be translated to a global LPN, and the global LPN may be sliced and allocated to an FTL instance. The global LPN may be an LPN which is transformed using a mapping table related to data granularity, and may not reflect an offset of a memory region. According to an embodiment of the present disclosure, the memory region may be a namespace.

The host LBA may be translated to a host LPN, and may be translated to a global LPN via the host LPN. The host LPN may be a contiguous LPN where start offsets of the memory regions are assumed to have a value of zero. The host LPN may be the host LBA divided by the number of pages per block. Based on the host LPN and the granularity mapping table, the host LBA may be translated to a global LPN. When the global LPN is sliced according to a slice unit, an FTL instance may be allocated. Since it is assumed that there are two FTL instances (FTL instance 0 and FTL instance 1), a bitmap may correspond to the FTL LPN for each of the FTL instances. The bitmap may include information on dirty data indicating whether data in the memory region has been changed during the migration operation.

Since the bitmap including the information on the dirty data corresponds to the FTL LPN, the flash translation layer 220 may manage the bitmap including the information on the dirty data through the FTL instance and the FTL LPN. When the host device 20 requests the information on the dirty data, the memory controller 200 reads the bitmap storing the information on the dirty data and provides the information on the dirty data to the host device 20.

In FIG. 2, the information on the dirty data included in the bitmap corresponding to the FTL instance and the FTL LPN is illustrated by way of example. For ease of description, it may be assumed that a value to be provided to the host device 20 is 9, and that a binary number corresponding to 9 is sliced and stored in the bitmap through the FTL LPN and the FTL instance. To provide the information on the dirty data to the host device 20, values in the bitmap corresponding to the FTL LPN are merged. For example, the flash interface layer 230 merges a bitmap value 1 of the FTL instance 0 with a bitmap value 100 of the FTL instance 1 to create 1001, and transfers 1001 through the host interface layer 210. Since 1001 is a binary number, the value transferred to the host device 20 may be 9. The flash translation layer 220 references the mapping table to obtain the bitmap containing the information on the dirty data, bit by bit. In FIG. 2, the response to the request from the host device 20 may be delayed since the flash translation layer 220 necessarily undergoes a plurality of FTL LPN translations to obtain the bitmap value of 1 for the FTL instance 0 and the bitmap value of 100 for the FTL instance 1. A method of obtaining the information on the dirty data in a plurality of bits may be needed so as to reduce the delay in responding to a request from the host device 20.

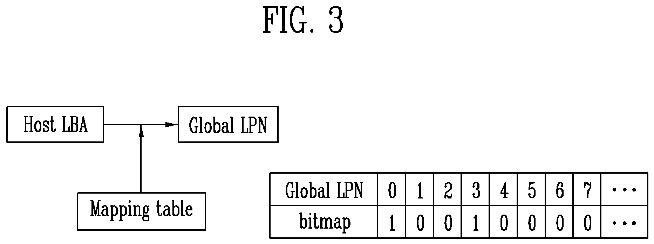

FIG. 3 is a diagram illustrating an operation for managing information on dirty data in a host interface layer according to an embodiment of the present disclosure.

Referring to FIG. 3, a host LBA may be translated to a global LPN, and a bitmap corresponding to the global LPN may include information on dirty data. The bitmap corresponding to the global LPN may be managed by the host interface layer 210. In FIG. 3, the description corresponding to FIG. 2 may be omitted.

The host LBA received from the host device 20 may be translated into the global LPN using a granularity mapping table. The host interface layer 210 may translate logical addresses corresponding to a memory region into global logical page numbers. The host interface layer 210 may manage a bitmap corresponding to each of the global logical page numbers. The bitmap may include information on dirty data indicating whether data in the memory region is changed while the migration operation is performed. The information on the dirty data may indicate whether the data in the memory region has changed after reception of a tracking command. According to an embodiment of the present disclosure, it may be assumed that the tracking command is received when the migration operation is performed. The host interface layer 210 may generate the bitmap corresponding to the global LPN, and may then update a value of the bitmap when the value of the data in the memory region changes while the data migration operation is performed.

As in FIG. 2, it may be assumed that the value of 9, which is to be provided to the host device 20 in FIG. 3, is stored in the bitmap. The bitmap including the information on the dirty data corresponds to a global LPN. In response to a request received from the host device 20 for the information on the dirty data, the host interface layer 210 may obtain a bitmap value of 1001 corresponding to the global LPN and provide the bitmap value to the host device 20. According to an embodiment of the present disclosure, the host interface layer 210 may acquire a bitmap value of one bit or more. When the host LBA are mapped contiguously by the granularity mapping table utilized to translate to the global LPN, the host interface layer 210 may acquire bitmap values in units of a plurality of bits. The host interface layer 210 may provide the information on the dirty data to the host device 20 by reducing the time required to acquire the bitmap values.

In FIG. 3, the value of 9 to be provided to the host device 20 is 1001 as a bitmap value, and the host interface layer may acquire 4 bits corresponding to 1001 at once, rather than acquiring 1001 one bit at a time. Since the process of merging the acquired bitmap values is also unnecessary, the time for managing the information on the dirty data may be shortened.

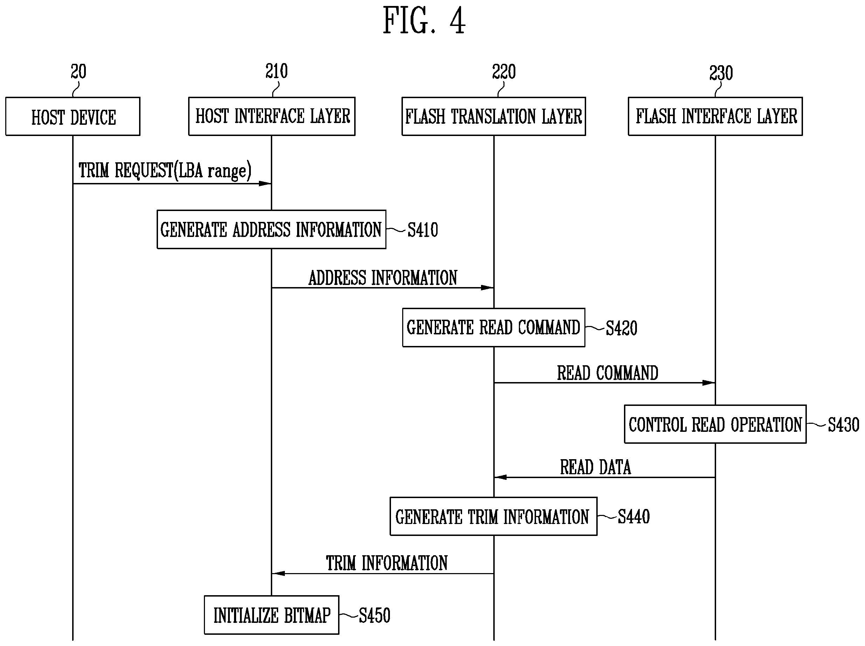

FIG. 4 is a sequence diagram illustrating a method of initializing a value of a bitmap including information on dirty data according to an embodiment of the present disclosure.

Referring to FIG. 4, a value of a bitmap including information on dirty data may be initialized in response to a request from the host device 20. The value of the bitmap may be initialized when the host LBA corresponding to the global LPN to which the bitmap corresponds is deallocated or invalid data is allocated. According to an embodiment of the present disclosure, the host interface layer 210 may request information from the flash translation layer 220 on whether the dirty data corresponding to at least some of the addresses in the memory region is unmapped, and may update the value of the bitmap based on the information, received from the flash translation layer 220, on whether the dirty data is unmapped.

At operation S410, the host interface layer 210 may receive a trim request from the host device 20. The trim request may include a range of LBAs to be trimmed. For example, a start LBA and an end LBA may be included in the trim request. The host interface layer 210 may generate address information corresponding to the range of the LBAs to be trimmed.

At operation S420, the flash translation layer 220 may receive the address information from the host interface layer 210. The flash translation layer 220 may generate a read command corresponding to the received address information. The generated read command is a command to read data corresponding to the received address.

At operation S430, the flash interface layer 230 may receive the read command from the flash translation layer 220. The received read command may include address information to be read. The flash interface layer 230 may control the memory device 100 to perform a read operation. The flash interface layer 230 may receive a read operation result of the memory device 100, and may transfer read data corresponding to the read operation result to the flash translation layer 220.

At operation S440, the flash translation layer 220 may generate trim information based on the received read data. The trim information may include information on whether dirty data corresponding to at least some addresses in the memory region is unmapped.

According to an embodiment of the present disclosure, the flash translation layer 220 may detect whether a portion of the dirty data is unmapped based on the received read data. When a portion of the dirty data is unmapped, the flash translation layer 220 may transfer information to the host interface layer 210 on a global LPN which indicates the portion of the unmapped dirty data. The information on the global LPN which indicates the portion of the unmapped dirty data may be included in the information on whether the dirty data is unmapped.

At operation S450, the host interface layer 210 may perform a trim operation based on the received trim information. The host interface layer 210 may initialize a value in the bitmap storing the information on the unmapped dirty data. According to an embodiment of the present disclosure, the host interface layer 210 may initialize the value of the bitmap including the information on the unmapped dirty data based on the information on the global LPN included in the trim information.

According to an embodiment of the present disclosure, the host interface layer 210 may initialize the value of the bitmap storing the information on the dirty data in response to a trim request from the host device 20. Even if the bitmap corresponds to a global LPN requested to be trimmed by the host device 20, the value of the bitmap may not be initialized as long as the mapped data is valid. Though not shown in FIG. 4, the host interface layer 210 may transfer a result of the trim operation in response to the trim request from the host device 20. The result of the trim operation may include information on addresses which are trimmed by the trim request of the host device 20 and information on addresses which are included in the range of addresses requested to be trimmed but are not trimmed since valid data is mapped.

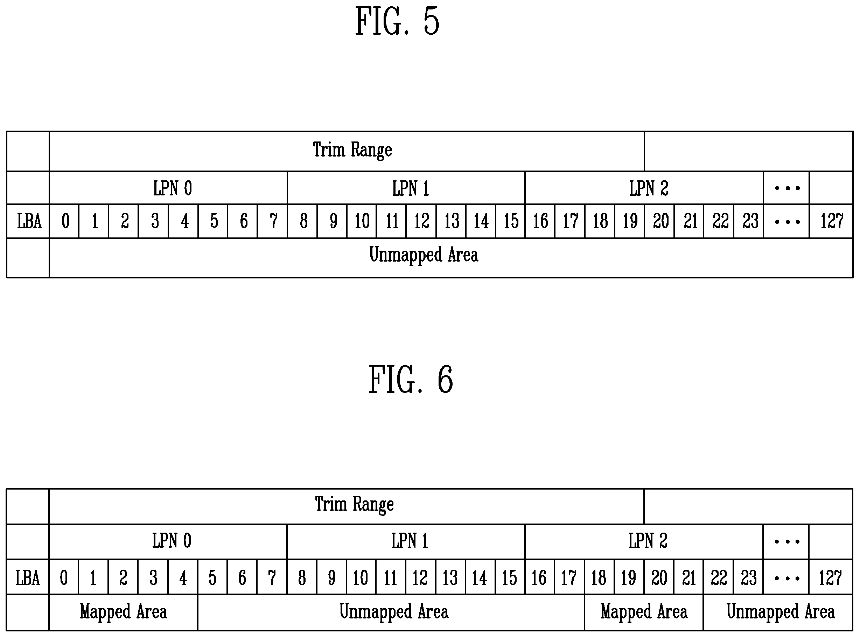

FIG. 5 is a diagram illustrating a case in which a range of addresses, requested to be trimmed during a trim operation of FIG. 4, is an unmapped area.

Referring to FIG. 5, a trim range for which a trim operation is requested from the host device 20, LPNs corresponding to LBAs, and an area mapped with valid data are shown. In FIG. 5, it may be assumed that information on dirty data is included in a 64 kB area, eight LBAs are allocated to one LPN, and one LPN manages 4 kB of mapping information. For ease of description, it may be assumed that in FIG. 5, the host device 20 forwards a trim request to the host interface layer 210 for a trim range from LBA 0 to LBA 19, and that valid data is not mapped to a bitmap including the information on the dirty data.

Since the host interface layer 210 does not know whether the bitmap corresponding to the trim range is mapped, the host interface layer 210 may request information on whether the dirty data is unmapped, from the flash translation layer. The information on the trim range may be included in the information on whether the dirty data is unmapped. The flash translation layer 220 may identify that all LBAs corresponding to the trim range are in the unmapped area. The flash translation layer 220 may transfer information on the LPNs corresponding to the unmapped area to the host interface layer 210. For example, the flash translation layer 220 may transfer LPN 0, which is the start LPN of the LPNs corresponding to the unmapped area in the trim range, and LPN 3, which is the number of LPNs being trimmed, to the host interface layer 210. The host interface layer 210 may initialize the values of the bitmaps corresponding to LPN 0, LPN 1, and LPN 2 based on the received LPN information corresponding to the unmapped area.

FIG. 6 is a diagram illustrating a case in which a portion of an address range, requested to be trimmed during a trim operation of FIG. 4, is a mapped area.

Referring to FIG. 6, a case where some LBAs of the trim range received from the host device 20 are unmapped and the remaining LBAs are mapped to valid data is shown. For convenience of description, it may be assumed that the trim range is from LBA 0 to LBA 19, with LBA 0 through LBA 4 and LBA 18 through LBA 21 mapped to valid data, and LBA 5 through LBA 17 and LBA 22 through LBA 127 unmapped. Portions of the description of FIG. 6 which correspond to those of the description of FIG. 5 may be omitted from description.

The flash translation layer 220 may detect a mapped area where valid data is mapped, and an unmapped area. The flash translation layer 220 may transfer information on the LPNs corresponding to the unmapped area to the host interface layer 210. In FIG. 6, the LBAs included in the trim range and included in the unmapped area are LBA 5 through LBA 17. Since the flash translation layer 220 transfers the information on the LPNs to the host interface layer 210, the information on the LPNs corresponding to the unmapped area may include LPN 1 as the start LPN and LPN 1 as the number of LPNs being trimmed. Upon receiving the information on the LPNs corresponding to the unmapped area, the host interface layer 210 may initialize the value of the bitmap corresponding to LPN 1.

In another embodiment of the present disclosure, the flash translation layer 220 may transfer trim information indicating whether the entirety of the trim range is trimmed to the host interface layer 210. In FIG. 6, when only some LBAs of the trim range are in the unmapped area, the flash translation layer 220 may transfer, to the host interface layer 210, information on the LPNs corresponding to the unmapped area restricting a trim operation for the entire trim range. In FIG. 6, the flash translation layer 220 may transfer, to the host interface layer 210, the information on the LPNs corresponding to the unmapped area, including LPN 1 which is the start LPN, and LPN 0 which is the number of LPNs. The host interface layer 210 may not initialize the value of the bitmap in response to the trim request, and may provide the result to the host device 20.

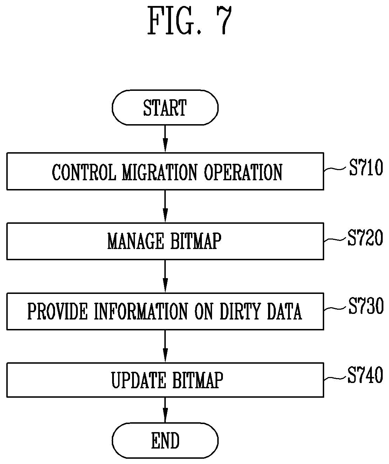

FIG. 7 is a flowchart illustrating an operation for managing information on dirty data according to embodiments of the present disclosure.

Referring to FIG. 7, a host interface layer may manage a bitmap including information on dirty data indicating whether data is changed during a data migration operation for a memory region. The bitmap may correspond to a global LPN into which a host LBA is translated. A tracking command for the dirty data may be transferred to the memory controller independently of or concurrently with a migration operation command. The host interface layer may update a bitmap including the information on the dirty data when the dirty data is unmapped.

At operation S710, a migration operation control section may control a memory device to perform a migration operation to move data in a first region of a plurality of memory regions to a second region. The migration operation may include moving data of a virtual machine created in a first memory region to a virtual machine created in a second memory region.

At operation S720, the host interface layer may manage a bitmap corresponding to each of the global logical page numbers into which logical addresses corresponding to the first region are translated. The bitmap may include information on dirty data indicating whether the data in the first region is changed while the migration operation is performed. A method of translating the logical addresses to the global logical page numbers by the host interface layer may correspond to the description of FIGS. 2 and 3.

The host interface layer may receive a tracking command indicating a reference time point of whether the data in the first region has changed. The host interface layer may set a value of the bitmap corresponding to the global logical page numbers of the data in the first region which has changed after the reference time point to a first value.

At operation S730, the host interface layer may, in response to a request from the host device, provide information on the dirty data to the host device. The host interface layer may receive a host request from the host device requesting the information on the dirty data. According to an embodiment of the present disclosure, the host interface layer may provide information on at least two bits of dirty data to the host device in response to the global logical page numbers being consecutive.

At operation S740, the host interface layer may update the bitmap based on whether the dirty data corresponding to at least some of the addresses in the first region is unmapped. The memory controller may cause the memory device to perform a read operation corresponding to at least some of the addresses of the first region. The host interface layer may request information on whether the dirty data corresponding to at least some of the addresses of the first region is unmapped, from the flash translation layer. The flash translation layer may transfer a read command directing a read operation corresponding to at least some of the addresses of the first region to the flash interface layer. The flash interface layer may transfer the received read command to the memory device, and may transfer read data received from the memory device to the flash translation layer.

The flash translation layer may forward information on whether the dirty data is unmapped to the host interface layer based on the read data received from the flash interface layer. According to an embodiment of the present disclosure, the flash translation layer may, in response to a portion of the dirty data being unmapped, include information on the global logical page numbers indicating the unmapped portion of the dirty data in the information on whether the dirty data is unmapped to the host interface layer. The host interface layer may set the value of the bitmap corresponding to the global logical page numbers indicating at least a portion of the unmapped dirty data to a second value.

In another embodiment of the present disclosure, the host interface layer may receive a trim request for a target region of the first region from the host device. The host interface layer may generate address information indicating the target region and transfer the address information to the flash translation layer. The flash translation layer may transfer trim information indicating whether to initialize a portion of the bitmap corresponding to the target region to the host interface layer, based on a result of a read operation for the target region performed in accordance with the address information.

The flash translation layer may transfer a read command instructing the read operation for the target region to the flash interface layer. The flash interface layer may transfer the read command to the memory device, and may transfer the result of the read operation for the target region received from the memory device to the flash translation layer. The flash translation layer may detect unmapped logical addresses which are mapped with invalid data in the portion of the bitmap. The flash translation layer may generate trim information which includes information on global logical page numbers corresponding to the unmapped logical addresses. Based on the trim information, the host interface layer may initialize a bitmap by setting a value of the unmapped bitmap of the global logical page numbers corresponding to the unmapped logical addresses in the portion of the bitmap to the second value.

The description of each operation in FIG. 7 may correspond to the description of FIGS. 1 to 6.

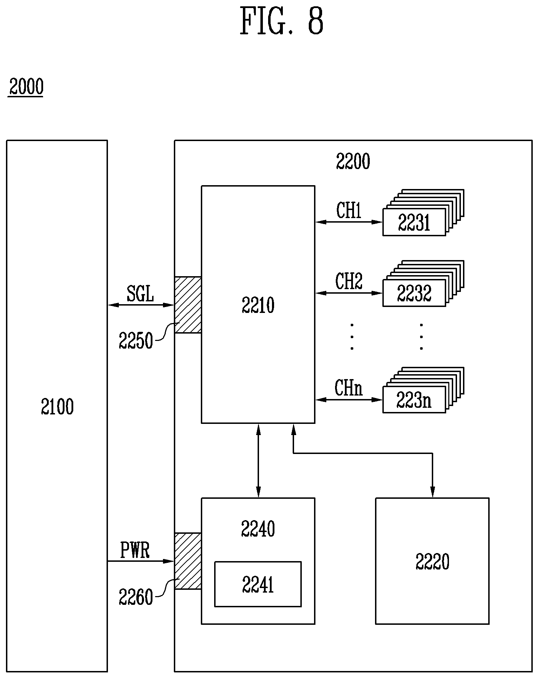

FIG. 8 is a diagram illustrating a configuration of a data storage system 2000 including a memory controller according to an embodiment of the present disclosure.

Referring to FIG. 8, the data storage system 2000 may include a host device 2100 and a solid state drive (SSD) 2200.

The SSD 2200 may include a controller 2210, a buffer memory device 2220, non-volatile memories 2231 to 223n, a power supply 2240, a signal connector 2250, and a power connector 2260. The SSD 2200 may include the memory device 100 described in FIG. 1.

The buffer memory device 2220 may temporarily store data to be stored in the plurality of non-volatile memories 2231 to 223n. In addition, the buffer memory device 2220 may temporarily store data read from the non-volatile memories 2231 to 223n. The data temporarily stored in the buffer memory device 2220 may be transferred to the host device 2100 or the non-volatile memories 2231 to 223n in response to control of the controller 2210.

The non-volatile memories 2231 to 223n may serve as storage media of the SSD 2200. The non-volatile memories 2231 to 223n may be coupled to the controller 2210 through a plurality of channels CH1 to CHn, respectively. One or more non-volatile memories may be coupled to one channel. Non-volatile memories coupled to one channel may be coupled to the same signal bus or data bus.

The controller 2210 may perform general operations of the SSD 2200. According to an embodiment of the present disclosure, the controller 2210 may translate logical addresses corresponding to a memory region into global logical page numbers, and manage a bitmap corresponding to each of the global logical page numbers. The bitmap includes information on dirty data indicating whether the data of the memory region is changed during a migration operation migrating the data to other memory region. The controller 2210 may update a value of the bitmap based on the information indicating whether the dirty data is unmapped. The controller 2210 may generate the information indicating whether the dirty data is unmapped based on global logical page numbers.

The power supply 2240 may provide power PWR which is input via the power connector 2260 to the SSD 2200 internally. The power supply 2240 may include an auxiliary power supply 2241. The auxiliary power supply 2241 may provide power to allow the SSD 2200 to shut down normally in the event of a sudden power off. The auxiliary power supply 2241 may include large capacitors capable of charging the power PWR.

The controller 2210 may communicate a signal SGL to and from the host device 2100 via the signal connector 2250. The signal SGL may include commands, addresses, data, etc. The signal connector 2250 may be configured as various types of connectors depending on how the host device 2100 and the SSD 2200 interface.

According to the present disclosure, a memory controller and a method of managing dirty data thereof that can quickly provide information on dirty data to a host device by managing a bitmap including the information on the dirty data indicating whether data included in a memory region in which a migration operation is performed in correspondence with global logical page numbers is changed, may be provided.

It will be apparent to those skilled in the art that various modifications can be made to the above-described embodiments of the present disclosure without departing from the spirit or scope of the invention. Thus, it is intended that the present disclosure cover all such modifications provided they come within the scope of the appended claims and their equivalents.

## Claims

1. A memory controller controlling a plurality of memory regions, the memory controller comprising:
a migration operation control section configured to perform a migration operation to move data of a first region to a second region, among the plurality of memory regions; and
a host interface layer configured to translate logical addresses corresponding to the first region into global logical page numbers, and manage a bitmap corresponding to each of the global logical page numbers,
wherein the bitmap comprises information on dirty data indicating whether the data of the first region is changed during the migration operation.

2. The memory controller of claim 1, wherein the host interface layer is configured to provide the information on the dirty data to a host device in response to a request from the host device.

3. The memory controller of claim 2, wherein in response to the global logical page numbers being consecutive, the host interface layer is configured to provide the information on the dirty data of at least two bits to the host device.

4. The memory controller of claim 1, further comprising:
a flash translation layer configured to perform an address translation operation based on a mapping table including mapping information between logical addresses and physical addresses of the plurality of memory regions; and
a flash interface layer configured to forward a command received from the flash translation layer to the plurality of memory regions, and receive a response to the command from the plurality of memory regions.

5. The memory controller of claim 4, wherein the host interface layer is configured to request, to the flash translation layer, information on whether the dirty data corresponding to at least a portion of addresses of the first region is unmapped, and update the bitmap based on the information on whether the dirty data is unmapped, which is received from the flash translation layer.

6. The memory controller of claim 5, wherein the flash translation layer is configured to:
transfer, to the flash interface layer, a read command directing a read operation corresponding to the at least the portion of the addresses in the first region,
transfer, to the host interface layer, the information on whether the dirty data is unmapped based on a result of the read operation received from the flash interface layer, and
transfer, to the host interface layer, information on a global logical page number indicating an unmapped portion of the dirty data by including the information in the information on whether the dirty data is unmapped, in response to a portion of the dirty data being unmapped.

7. A memory controller comprising:
a host interface layer configured to manage a bitmap including information on dirty data indicating whether data in a memory region is changed since receiving a tracking command, and generate address information indicating a target region upon receiving a trim request for the target region of the memory region from a host device; and
a flash translation layer configured to transfer, to the host interface layer, trim information indicating whether to initialize a portion of the bitmap corresponding to the target region, based on a result of performing a read operation on the target region according to the address information received from the host interface layer,
wherein the host interface layer is configured to initialize the portion of the bitmap based on the trim information.

8. The memory controller of claim 7, further comprising a flash interface layer configured to transfer a command received from the flash translation layer to the memory region, and receive a response to the command from the memory region,
wherein the flash translation layer is configured to transfer a read command directing the read operation for the target region to the flash interface layer.

9. The memory controller of claim 7,
wherein the bitmap comprises information on dirty data corresponding to each of global logical page numbers to which logical addresses corresponding to the memory regions are translated,
wherein the flash translation layer is configured to detect unmapped logical addresses mapped with invalid data in the portion of the bitmap,
wherein the trim information comprises information on global logical page numbers corresponding to the unmapped logical addresses, and
wherein the host interface layer is configured to initialize an unmapped bitmap of the global logical page numbers corresponding to the unmapped logical addresses in the portion of the bitmap.

10. The memory controller of claim 7, wherein the address information comprises information on a start logical page number and an end logical page number in the target region.

11. A method of operating a memory controller, the method comprising:
controlling a memory device to perform a migration operation to move data in a first region to a second region, among a plurality of memory regions included in the memory device;
managing a bitmap corresponding to each of global logical page numbers to which logical addresses corresponding to the first region are translated; and
providing information on dirty data indicating whether data in the first region is changed during the migration operation included in the bitmap to a host device, in response to a request from the host device.

12. The method of claim 11, wherein the managing the bitmap comprises:
receiving a tracking command indicating a reference time point of whether the data in the first region is changed; and
setting, to a first value, a value in the bitmap corresponding to global logical page numbers corresponding to data changed after the reference time point in the data of the first region.

13. The method of claim 11, wherein the providing the information on the dirty data to the host device comprises:
receiving the request from the host device; and
providing the information on the dirty data of at least two bits to the host device in response to the global logical page numbers being consecutive.

14. The method of claim 12, further comprising updating the bitmap based on whether the dirty data corresponding to at least a portion of addresses in the first region is unmapped,
wherein the updating the bitmap comprises:
controlling the memory device to perform a read operation corresponding to the at least the portion of the addresses of the first region; and
determining whether the dirty data is unmapped based on a result of the read operation; and
setting, to a second value, a value of a bitmap corresponding to global logical page numbers indicating at least an unmapped portion of the dirty data.

15. The method of claim 12, further comprising:
receiving a trim request for a target region of the first region from the host device;
controlling the memory device to perform a read operation on the target region based on address information indicating the target region; and
initializing a value of a portion of the bitmap corresponding to the target region in the bitmap based on a result of the read operation,
wherein the initializing the value of the portion of the bitmap comprises:
detecting unmapped logical addresses mapped with invalid data in the portion of the bitmap, based on a result of the read operation; and
setting, to a second value, a value of an unmapped bitmap of global logical page numbers corresponding to the unmapped logical addresses of the portion of the bitmap.
